# FASCICULE DE BREVET EUROPEEN

(11) **EP 4 590 496 B1**
(45) Date de publication et mention de la délivrance du brevet: **26.08.2026**
(21) Numéro de dépôt: 23790051.9
(22) Date de dépôt: 20.09.2023
(51) Int. Cl.: B29C 70/44, B29C 73/30, B29C 73/32, B29C 73/34, B29C 43/36, B29C 70/54

(54) **OUTILLAGE DE MISE EN PRESSION D'UNE ZONE DE TRAVAIL D'UNE PIÈCE EN MATÉRIAU COMPOSITE, ROBOT ÉQUIPÉ D'UN TEL OUTILLAGE ET PROCÉDÉ DE RÉPARATION D'UNE TELLE PIÈCE EN MATÉRIAU COMPOSITE AVEC UN TEL OUTILLAGE**
WERKZEUG ZUR DRUCKBEAUFSCHLAGUNG EINER ARBEITSZONE EINES TEILS AUS VERBUNDSTOFF, ROBOTER MIT SOLCH EINEM WERKZEUG UND VERFAHREN ZUR REPARATUR SOLCH EINES TEILS AUS VERBUNDSTOFF
TOOLING FOR PRESSURIZING A WORK ZONE OF A PART MADE OF COMPOSITE MATERIAL, ROBOT EQUIPPED WITH SUCH TOOLING AND METHOD FOR REPAIRING SUCH A PART MADE OF COMPOSITE MATERIAL USING SUCH TOOLING

(30) Priorité: 21.09.2022 FR 2209552
(43) Date de publication de la demande: 30.07.2025
(73) Titulaire: Safran Nacelles, 76700 Gonfreville-l'Orcher (FR)
(72) Inventeur: MARICAL, Arnaud, 77550 Moissy-Cramayel (FR); HELIN, Julien, 77550 Moissy-Cramayel (FR); DEZEUSTRE, Nicolas, 77550 Moissy-Cramayel (FR)
(74) Mandataire: Gevers & Orès
(86) Numéro de dépôt international: PCT/FR2023/051442
(87) Numéro de publication internationale: WO 2024/062196

(56) Documents cités:
- US-A1- 2011 259 515
- US-A1- 2021 379 845
- US-B1- 6 318 433

## Description

### Domaine de l'invention

La présente invention concerne la réparation ou la fabrication de pièce en matériau composite comprenant un renfort fibreux, notamment avec des fibres pré-imprégnées d'une résine.

### Arrière-plan technique

L'art antérieur comprend les documents US-A1-2011/259515, US-A1-2021/379845, et US-B1-6318433.

De nombreuses pièces utilisées dans différents domaines tels que l'automobile et l'aéronautique comprennent des pièces en matériau composite. Les matériaux composites permettent de réaliser des pièces légères et avec des caractéristiques mécaniques élevées. Lorsque le renfort fibreux est réalisé avec des fibres pré-imprégnées d'une résine, celles-ci permettent d'obtenir des pièces présentant une forme complexe en trois dimensions et de toute taille.

Il arrive que les pièces en matériau composite subissent des dommages en cours de fabrication, de fonctionnement, de maintenance ou de stockage, par exemple suite à un impact. Les pièces en matériau composite peuvent être réparées lorsque la zone endommagée est limitée. Pour cela, les mêmes types de matériaux sont utilisés et notamment des fibres pré imprégnées d'une résine ou des fibres sèches imprégnées manuellement.

La densification des fibres imprégnées de résine nécessite une phase de polymérisation qui est réalisée de manière générale en autoclave. En effet, un autoclave permet d'appliquer un cycle thermique et un cycle de pression qui ont pour but de compacter les fibres pour leur maintien en position sur la pièce en matériau composite à réparer, de gélifier la résine qui imprègne les fibres et d'obtenir un bon ratio résine/fibres. Les autoclaves sont des outils couteux et imposants qui sont installés dans des ateliers où les pièces en matériau composite sont fabriquées et/ou réparées.

Un des inconvénients est que les pièces doivent être démontées et transportées dans ces ateliers. Par ailleurs, tous les ateliers ne sont pas équipés de grands autoclaves qui sont onéreux de sorte qu'il arrive que certains autoclaves ne puissent pas recevoir des pièces de très grandes dimensions.

Il est possible de réparer les pièces en matériau composite encore montées sur l'équipement qui en est équipé, c'est-à-dire sans autoclave. Lors d'une telle réparation, les fibres pré-imprégnées de résine sont disposées sur la zone endommagée et sont recouvertes par une vessie qui est reliée de manière étanche à la pièce en matériau composite et qui permet une mise sous vide de la zone endommagée. Cependant, les paramètres de pression permettant d'obtenir des pièces à haute tenue mécanique ne sont pas atteints car la mise sous vide de la vessie limite la pression appliquée à la pression atmosphérique de la zone où est réalisée la réparation ainsi que des capacités de la pompe à vide utilisée. A titre d'exemple, la pression qui est exercée sur les fibres pré-imprégnées est inférieure à 1 bar ce qui n'est pas suffisant pour atteindre les propriétés thermomécaniques souhaitées pour la pièce.

Il existe un besoin de résoudre tout ou partie des inconvénients précités.

### Résumé de l'invention

L'objectif de la présente invention est de fournir une solution permettant de polymériser une pièce en matériau composite avec au moins une pression adéquate, en tout lieu, de manière autonome et rapidement.

Nous parvenons à cet objectif conformément à l'invention grâce à un outillage de mise en pression d'une zone de travail d'une pièce en matériau composite, le matériau composite comportant un renfort fibreux densifié par une résine, des fibres pré-imprégnées étant appliquées dans la zone de travail et l'outillage de mise en pression étant configuré de manière à être monté de manière amovible sur un robot, l'outillage de mise en pression comprenant un squelette articulé configuré de manière à s'adapter à la forme de la pièce autour de la zone de travail, et au moins une membrane gonflable qui est solidarisée au squelette et qui est configurée pour appliquer dans un état gonflé une pression prédéterminée et uniforme sur la zone de travail.

Ainsi, cette solution permet d'atteindre l'objectif susmentionné. En particulier, l'utilisation d'un tel outillage permet d'appliquer une pression déterminée et uniforme sur toute la zone de travail de la pièce en matériau composite. La configuration de l'outillage en fait un moyen utilisable dans tous les ateliers, voire sous aile dans le cas d'un aéronef, apportant toutes les caractéristiques de l'autoclave. Cela réduit les transports de pièces d'un endroit à l'autre et une dépense en énergie et moyens humains au juste besoin. A cela s'ajoute le fait que cet outillage permet de répondre au défi écologique en évitant le transport de pièces encombrantes et fragiles pour leur réparation et en évitant les déchets en réparant les pièces endommagées.

L'outillage de mise en pression comprend également l'une ou plusieurs des caractéristiques suivantes, prises seules ou en combinaison :
- l'outillage de mise en pression comprend un système chauffant monté sur la membrane gonflable de manière à appliquer une température prédéterminée.
- le squelette articulé comprend plusieurs segments qui sont articulés entre eux.
- la membrane gonflable est reliée à une source d'alimentation en fluide de gonflage.
- la membrane gonflable présente dans son état gonflé une hauteur comprise entre 2 et 5 cm.
- la source d'alimentation en fluide est embarquée dans l'outillage de mise en pression ou portable.
- la source d'énergie électrique est embarquée dans l'outillage de mise en pression ou portable.
- l'outillage de mise en pression comprenant un système de fixation pour la fixation de manière amovible à un robot.
- la pression et la température appliquées sur la zone de travail sont constantes pendant l'étape de polymérisation.
- la pression appliquée sur la zone de travail est homogène.
- la température appliquée sur la zone de travail est comprise entre 60° et 180°C.

L'invention concerne également un robot collaboratif comprenant un châssis, un bras qui est porté par le châssis et un effecteur relié au bras de manière amovible, l'effecteur étant destiné à être déplacé par le bras et étant formé par l'outillage de mise en pression tel que susmentionné.

L'invention concerne en outre un procédé de réparation d'une zone endommagée d'une pièce en matériau composite, le matériau composite comprenant un renfort fibreux densifié par une résine, le procédé de réparation comprenant :
- une étape d'application de fibres pré-imprégnées de résine dans la zone endommagée formant une zone de travail, et
- une étape de mise sous vide d'une cavité interne formée par une vessie recouvrant de manière étanche les fibres pré-imprégnées dans la zone de travail,
le procédé comprenant:
- une étape de mise en place d'un outillage de mise en pression présentant l'une quelconque des caractéristiques susmentionnées au regard des fibres pré-imprégnées recouvertes par la vessie, et
- une étape de polymérisation des fibres pré-imprégnées dans laquelle est réalisée au moins une sous étape d'application d'une pression prédéterminée et uniforme par la membrane gonflable sur la vessie recouvrant les fibres pré-imprégnées.

Le procédé comprend également l'une ou plusieurs des caractéristiques et/ou étapes suivantes, prises seules ou en combinaison :
- la pression prédéterminée est comprise entre 1 bar et 3 bars.
- l'étape de polymérisation comprend une sous étape d'application d'une température prédéterminée.
- la température prédéterminée est comprise entre 60°C et 180°C.
- le procédé comprend une étape d'application d'une contre pression sur la pièce en matériau composite.
- la contre pression est réalisée par un autre outillage de mise en pression.
- l'application de la température prédéterminée est réalisée par les deux outillages de mise en pression qui sont disposés de part et d'autre de la pièce en matériau composite.
- la pression et la température appliquées sur la zone de travail sont pilotées pendant l'étape de polymérisation.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue schématique et de côté d'un exemple d'outillage de mise en pression équipé d'un robot collaboratif selon l'invention ;
La figure 2 est une vue de dessus et schématique d'un exemple de réalisation d'un organe de l'outillage de mise en pression selon l'invention ;
La figure 3 est une vue en perspective de deux robots collaboratifs permettant la réparation d'une pièce en matériau composite selon l'invention.

### Description détaillée de l'invention

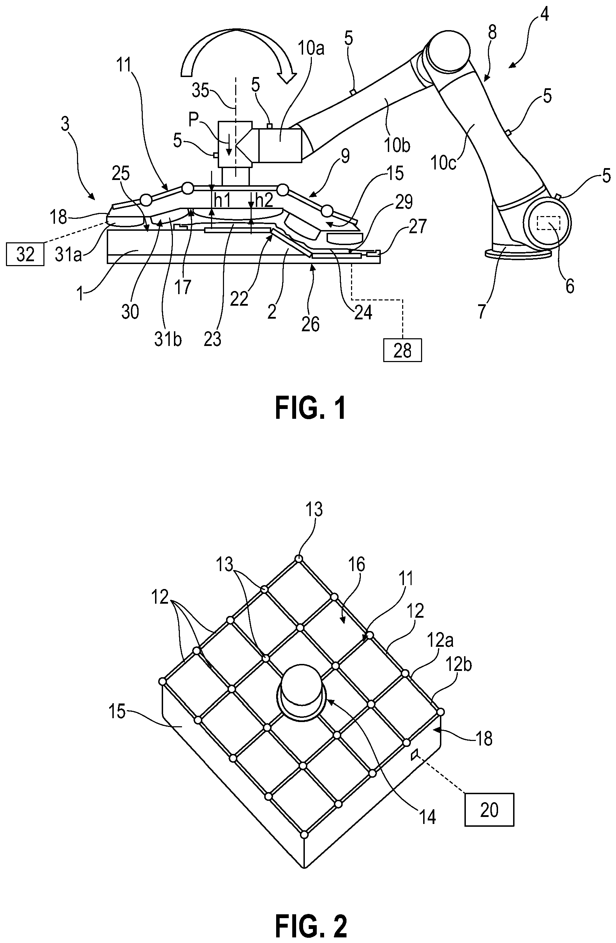

La figure 1 représente partiellement une pièce en matériau composite. Le matériau composite comprend un renfort fibreux densifié par une résine. Plus précisément, le renfort fibreux est réalisé de plusieurs plis de fibres pré-imprégnées d'une résine. La pièce en matériau composite peut équiper un véhicule automobile, un aéronef, une nacelle turbomachine pour aéronef, etc.

Sur la figure 1, la pièce en matériau composite comprend une zone endommagée qui doit être réparée. Cette zone endommagée forme une zone de travail 2. Pour cela, un outillage de mise en pression 3 est également représenté sur la figure 1 et est destiné à faciliter la réparation de la zone de travail 2.

L'outillage de mise en pression 3 est configuré de manière à équiper un robot 4, notamment un robot collaboratif qui est également illustré sur la figure 1. Les robots collaboratifs sont équipés de moyens de détection 5 et d'un système électronique de commande 6 auquel sont reliés les moyens de détection 5 pour lui permettre de se déplacer et/ou d'évoluer dans son environnement de travail. Chaque robot 4 est destiné à réaliser des tâches spécifiques seul (en autonomie) ou en coopération avec un ou des opérateurs ou encore avec d'autres robots collaboratifs évoluant également dans l'environnement de travail du robot. Les tâches sont par exemple des manipulations, des réparations, des déplacements, ou d'autres taches pouvant être plus minutieuses. Ces robots collaboratifs sont également connus sous le terme de « cobot ».

De manière avantageuse, mais non limitativement, les moyens de détection 5 peuvent être des capteurs de présence, capteurs de position, des caméras, des moyens de mesure, etc. et/ou une combinaison de ces moyens. Les moyens de détection 5 sont montés sur différentes parties du robot 4.

Avantageusement, le système électronique de commande 6 est doté de moyens de calcul, de mémoires, et de moyens de traitement d'informations permettant au robot 4 d'agir et/ou de réagir en fonction des informations reçues des moyens de détection 5.

Le robot 4 comprend un châssis 7, un bras 8 porté par le châssis 7 et un effecteur 9 relié de manière amovible au bras 8. Les moyens de détection 5 peuvent être montés sur l'effecteur 9 et/ou le bras 8 et/ou le châssis 7.

Le châssis 7 est avantageusement monté sur des moyens de déplacement (non représentés) de sorte que le robot 4 se déplace de manière autonome dans son environnement de travail. De manière alternative, le châssis est configuré de manière à être disposé fixement sur un support de travail.

Le bras 8 comprend de manière avantageuse, mais non limitativement, plusieurs portions 10a, 10b, 10c qui sont articulées entre elles via par exemple des liaisons pivots de différents axes ou des liaisons rotules de manière à manipuler aisément l'effecteur 9 et suivant plusieurs directions.

L'effecteur 9 est destiné à effectuer les différentes tâches pour lesquelles le robot 4 est employé. L'effecteur 9 représente la tête du robot et est ici formé de manière avantageuse par l'outillage de mise en pression 3.

En référence aux figures 1 et 2, l'outillage de mise en pression 3 comprend un squelette 11 articulé qui est configuré de manière à s'adapter à la forme de la zone de travail 2. Nous entendons par l'expression « squelette articulé » un organe formé de plusieurs éléments articulés entre eux de sorte que l'organe soit déformable.

Dans le présent exemple, le squelette 11 comprend plusieurs segments 12 articulés entre eux suivant au moins une articulation 13. Cette dernière 13 peut être au moins une liaison pivot. En particulier, les segments 12 sont disposés de manière à former un quadrillage et au moins une extrémité 12a, 12b de chaque segment 12 est articulée à une extrémité 12a, 12b d'un segment adjacent. Les segments qui délimitent le périmètre peuvent former un carré, un rectangle ou tout autre forme permettant l'articulation des segments et la déformation du squelette 11 par rapport à la zone de travail de la pièce.

Suivant une caractéristique avantageuse, mais non limitative, les différentes articulations 13 sont verrouillables dans une position adéquate pour maintenir la membrane 15 décrite ultérieurement en compression.

L'outillage de mise en pression 3 comprend également une membrane 15 qui est configurée pour appliquer une pression prédéterminée et uniforme sur la zone de travail 2. La membrane 15 est gonflable. La membrane 15 est adaptée à occuper un état dégonflé et un état gonflé. La membrane gonflable 15 est représentée dans son état gonflé sur la figure 1. De manière avantageuse, la membrane 15 est solidarisée au squelette 11 de manière à faciliter la manipulation de l'outillage 3 et un gain de temps pour la réparation. La pression prédéterminée est avantageusement appliquée dans l'état gonflé pour que la pression soit uniforme dans la membrane.

Pour cela, la membrane gonflable 15 est reliée à une source d'alimentation 20 en fluide de gonflage. La source d'alimentation 20 est représentée schématiquement sur la figure 2. Le fluide de gonflage peut être de l'air ou une huile ou encore tout autre fluide liquide ou gazeux. La source d'alimentation 20 en fluide peut comprendre une pompe ou un compresseur. De même, la source d'alimentation 20 en fluide peut être embarquée dans l'outillage de mise en pression 3 et/ou dans le robot 4 collaboratif. De la sorte, la source d'alimentation 20 est facilement déplaçable avec l'outillage de mise en pression et/ou le robot collaboratif pour que la réparation puisse se faire en tout lieu, par exemple, sous aile dans le cadre d'une pièce d'aéronef ou dans un atelier.

De manière avantageuse, mais non limitativement, la membrane 15 présente une surface externe de périmètre sensiblement égal à celui du squelette 11 de sorte que la pression soit mieux répartie sur toute la paroi de la membrane 15. La membrane 15 présente en particulier une première paroi 16 et une deuxième paroi 17 qui sont opposées. Les deux parois 16, 17 sont reliées par une bordure périphérique 18 délimitant le périmètre de la membrane 15. La première paroi 16 est reliée au squelette 11. La liaison peut être réalisée par collage ou tout autre moyen. La deuxième paroi 17 est destinée à être orientée vers la zone de travail 2.

La pression prédéterminée est comprise typiquement entre 1 bar et 10 bars. Préférentiellement la pression prédéterminée est de 2,5 bars.

Suivant une caractéristique avantageuse, la membrane 15 présente dans son état gonflé une hauteur h1 comprise typiquement entre 2 cm et 5 cm. Il est également possible d'avoir des hauteurs supérieures à cette valeur. La hauteur h1 est mesurée entre la première paroi 16 et la deuxième paroi 17.

La membrane 15 gonflable est avantageusement réalisée dans un matériau flexible et/ou souple. Le matériau peut être par exemple un polymère tel que le polyéthylène (PE), polyéthylène téréphtalate (PET), le polypropylène (PP), un élastomère ou analogue.

Toujours sur la figure 1, l'outillage de mise en pression 3 comprend un système chauffant 30 monté sur la membrane 15 gonflable de manière à appliquer une température prédéterminée. Préférentiellement, le système chauffant 30 est rapporté sur la membrane gonflable. Dans cet exemple de réalisation, le système chauffant 30 comprend plusieurs organes chauffants 31a, 31b, ... qui sont répartis sur toute la deuxième paroi 17 de la membrane gonflable.

De manière avantageuse, mais non limitativement, les organes chauffants 31a, 31b présentent une hauteur h2 comprise entre 1 mm et 5 mm et de préférence entre 1 mm et 2 mm. Le système chauffant 30 est relié à une source d'énergie électrique 32. Comme pour la source d'alimentation en fluide, la source d'énergie électrique 32 peut être embarquée dans l'outillage de mise en pression 3 et/ou le robot collaboratif ou encore être transportable facilement pour faciliter la réparation de la pièce en matériau composite en tout lieu

La température prédéterminée est comprise de manière avantageuse entre 60° et 180°C.

En référence à la figure 2, l'outillage de mise en pression 3 est équipé d'un système de fixation 14 permettant une fixation de celui-ci de manière amovible avec le bras du robot.

Cet outillage de mise en pression 3 est particulièrement adapté pour la réparation de zone endommagée de pièce en matériau composite et aussi pour la fabrication de pièce en matériau composite.

Nous allons maintenant décrire un procédé de réparation d'une pièce en matériau composite. Le procédé comprend les différentes étapes :
- d'application de fibres pré-imprégnées 22 de résine dans la zone de travail,
- de mise sous vide d'une cavité interne 23 formée par une vessie 24 recouvrant de manière étanche les fibres pré-imprégnées 22 dans la zone de travail,
- mise en place d'un outillage de mise en pression 3 portable au regard des fibres pré-imprégnées recouvertes par la vessie, et
- une étape de polymérisation des fibres pré-imprégnées dans laquelle est réalisée au moins une sous étape d'application d'une pression prédéterminée et uniforme par la membrane gonflable sur la vessie recouvrant les fibres pré-imprégnées.

En référence à la figure 1, le procédé comprend préalablement à l'application des fibres pré-imprégnées une étape de préparation de la zone de travail 2. Cette dernière est située au niveau d'une première surface 25 de la pièce en matériau composite. La pièce en matériau composite comprend une deuxième surface 26 opposée à la première surface.

L'étape de préparation comprend le retrait des plis et/ou fibres de la zone de travail 2 qui ne sont plus en cohésion avec les autres plis et/ou fibres de la pièce en matériau composite. En d'autres termes, cette étape de préparation consiste en un nettoyage de la zone de travail 2.

Lors de l'étape d'application des fibres pré-imprégnées 22 de résine, les fibres sont appliquées sous forme de plusieurs plis un à un. Les plis peuvent être réalisés via un tissage bi-dimensionnel (2D) de manière avantageuse mais non limitativement. Les fibres pré-imprégnées comprennent par exemples des fibres en carbone, en verre, en polyamide, en kevlar, en céramique, en cuivre, en bronze ou encore un mélange de ces matériaux.

Les fibres sont pré-imprégnées dans une étape antérieure (elles sont fournies déjà pré-imprégnées) ou celles-ci sont sèches et imprégnées juste avant la mise en place sur la zone de travail avec une résine. Le terme « pré-imprégné » désigne alors les fibres déjà imprégnées de résine avant l'étape d'application des fibres.

La résine est capable de résister à des températures élevées, notamment des températures supérieures à 120°C. Une telle résine permet d'obtenir un matériau composite avec des performances mécaniques élevées. Un exemple de résine est une résine thermodurcissable à base d'époxy ou une résine phénolique telle que les polybismaléimides (BMI).

Le procédé comprend une étape de mise en place de la vessie 24 permettant de recouvrir de manière étanche les fibres pré-imprégnées 22. La vessie 24 forme la cavité interne 23 dans laquelle se trouvent les fibres pré-imprégnées 22. La vessie 24 recouvre également une portion de la première surface 25 entourant les fibres pré-imprégnées. La vessie 24 se présente sous la forme d'une peau qui est souple et flexible. La vessie 24 est fixée de manière étanche à la première surface et de manière amovible. En particulier, la vessie 24 présente un bord qui est fixé à la première surface 25. La fixation est réalisée par tout moyen permettant une étanchéité de la vessie, une installation ainsi qu'un retrait facile.

De manière avantageuse, mais non limitativement, un joint 27 est prévu au niveau de la fixation pour éviter que de l'air ou un autre fluide ne pénètre dans la cavité interne 23 formée par la vessie 24 et la première surface 25 de la pièce en matériau composite. Le joint 27 est réalisé de manière avantageuse dans un matériau déformable.

L'étape de mise sous vide de la vessie 24 est réalisée par un dispositif de mise sous vide 28 qui permet d'extraire l'air ou le gaz présent dans la cavité interne 23. La vessie 24 comprend à cet effet à un orifice d'aspiration 29 qui est relié au dispositif de mise sous vide 28. Ce dernier comprend de manière avantageuse une pompe à vide ou un compresseur.

L'étape de polymérisation comprend l'application d'au moins une pression prédéterminée et uniforme par la membrane 15 gonflable. De la sorte, pour appliquer cette pression, la membrane 15 est gonflée au moyen du fluide de gonflage. Le squelette 11 qui appuie sur la membrane 15 gonflable permet que celle-ci répartisse uniformément la pression sur toute la zone de travail 2. La pression est orientée suivant une direction parallèle à l'axe vertical dans le plan de la figure 1. Ici, la direction est parallèle à l'axe 35 du système de fixation 14 de l'outillage 3. La pression est orientée vers la zone de travail 2. De manière avantageuse, la pression (pilotée) est constante pendant l'étape de polymérisation.

Lors de l'étape de mise en place de l'outillage 3 en regard de la zone de travail et des fibres pré-imprégnées, le squelette 11 articulé est disposé à distance des fibres pré-imprégnées (en particulier de la vessie) pour que lors du gonflage de la membrane 15 celle-ci soit bien en contact avec la vessie 24. La distance prédéterminée est comprise entre 1 et 3 cm de la première surface 25. Les organes chauffants 31a, 31b du système chauffant 30 sont disposés entre la membrane 15 gonflable et la vessie 24.

L'étape de polymérisation comprend également l'application d'une température prédéterminée aux fibres pré imprégnées. Cette température est appliquée par les organes chauffants 31. La température prédéterminée (pilotée) est constante également pendant l'étape de polymérisation.

Ainsi, la pression nécessaire à une polymérisation sera amenée par un outillage de mise en pression unique (tête d'un robot collaboratif) incluant au moins une membrane 15 gonflable qui permet une application uniforme et homogène de la pression. La température et la pression permettent une densification des plis de fibres pré-imprégnées.

Le procédé tel que décrit peut être employé pour la fabrication d'une pièce en matériau composite également.

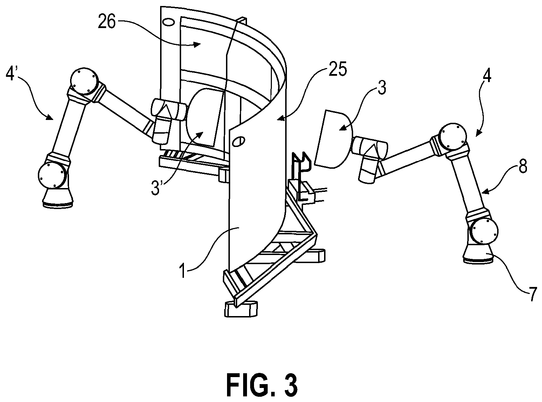

Sur la figure 3 est représenté un autre mode de réalisation du procédé de réparation ou de fabrication de la pièce en matériau composite. Ce mode de réalisation est particulièrement mis en œuvre dans le cadre d'une pièce de matériau composite très souple. Dans ce mode de réalisation, le procédé comprend une étape supplémentaire d'application d'une contre pression sur la pièce en matériau composite. Plus précisément, la contre pression est appliquée sur la deuxième surface 26 au niveau de la zone de travail. Une telle configuration permet de maintenir en position la pièce et d'éviter que la pièce en matériau composite ne se déforme. De manière avantageuse, mais non limitativement, la contre pression est réalisée par un autre outillage de mise en pression 3'. Cette dernière serait portée de préférence par un autre robot collaboratif 4'.

Suivant un mode de réalisation, l'application de la température prédéterminée est réalisée par les deux outillages de mise en pression 3, 3' disposés de part et d'autre de la pièce 1 en matériau composite. Cela permet une bonne diffusion et répartition de la chaleur dans le cas d'une pièce de matériau composite d'une importante épaisseur. L'épaisseur importante sous-entend que la pièce n'est pas souple et présente une problématique de diffusion de température. La polymérisation des fibres pré-imprégnées est homogène et est dès lors accélérée.

## Revendications

1. Outillage de mise en pression (3) d'une zone de travail (2) d'une pièce (1) en matériau composite, le matériau composite comportant un renfort fibreux densifié par une résine, des fibres pré-imprégnées (22) étant appliquées dans la zone de travail (2) et l'outillage de mise en pression (3) étant configuré de manière à être monté de manière amovible sur un robot, l'outillage de mise en pression (3) comprenant :
- un squelette (11) articulé configuré de manière à s'adapter à la forme de la pièce (1) autour de la zone de travail (1), et
- au moins une membrane (15) gonflable qui est solidarisée au squelette (11) et qui est configurée pour appliquer dans un état gonflé une pression prédéterminée et uniforme sur la zone de travail (2).

2. Outillage de mise en pression (3) selon la revendications précédente, **caractérisé en ce qu'**il comprend un système chauffant (30) monté sur la membrane gonflable (15) de manière à appliquer une température prédéterminée.

3. Outillage de mise en pression (3) selon l'une quelconque des revendications précédentes, **caractérisé en ce que** le squelette (11) articulé comprend plusieurs segments (12) qui sont articulés entre eux.

4. Outillage de mise en pression (3) selon l'une quelconque des revendications précédentes, **caractérisé en ce que** la membrane (15) gonflable est reliée à une source d'alimentation (20) en fluide de gonflage.

5. Outillage de mise en pression (3) selon l'une quelconque des revendications précédentes, **caractérisé en ce que** la membrane (15) gonflable présente dans son état gonflé une hauteur (h1) comprise entre 2 et 5 cm.

6. Outillage de mise en pression (3) selon l'une quelconque des revendications précédentes, **caractérisé en ce qu'**il comprend un système de fixation (14) pour la fixation de manière amovible à un robot collaboratif (4).

7. Robot collaboratif (4) comprenant un châssis (7), un bras (8) qui est porté par le châssis (7) et un effecteur (9) relié au bras (8) de manière amovible, l'effecteur (9) étant destiné à être déplacé par le bras (8) et étant formé par l'outillage de mise en pression (3) selon l'une quelconque des revendications précédentes.

8. Procédé de réparation d'une zone endommagée d'une pièce (1) en matériau composite, le matériau composite comprenant un renfort fibreux densifié par une résine, le procédé de réparation comprenant :
- une étape d'application de fibres pré-imprégnées (22) de résine dans la zone endommagée formant une zone de travail (2), et
- une étape de mise sous vide d'une cavité interne (23) formée par une vessie (24) recouvrant de manière étanche les fibres pré-imprégnées (22) dans la zone de travail (2), **caractérisé en ce que** le procédé comprend :
- une étape de mise en place d'un outillage de mise en pression (3) selon l'une quelconque des revendications 1 à 6 au regard des fibres pré-imprégnées recouvertes par la vessie (24), et
- une étape de polymérisation des fibres pré-imprégnées (22) dans laquelle est réalisée au moins une sous étape d'application d'une pression prédéterminée et uniforme par la membrane (15) gonflable sur la vessie (24) recouvrant les fibres pré-imprégnées (22).

9. Procédé de réparation selon la revendication précédente, **caractérisé en ce que** la pression prédéterminée est comprise entre 1 bar et 3 bars.

10. Procédé de réparation selon la revendication 8 ou 9, **caractérisé en ce que** l'étape de polymérisation comprend une sous étape d'application d'une température prédéterminée.

11. Procédé de réparation selon la revendication précédente, **caractérisé en ce que** la température prédéterminée est comprise entre 60°C et 180°C.

12. Procédé de réparation selon la revendication précédente, **caractérisé en ce qu'**il comprend une étape d'application d'une contre pression sur la pièce (1) en matériau composite.

13. Procédé de réparation selon la revendication précédente, **caractérisé en ce que** la contre pression est réalisée par un autre outillage de mise en pression (3').

14. Procédé de réparation selon la revendication précédente, **caractérisé en ce que** l'application de la température prédéterminée est réalisée par les deux outillages de mise en pression (3, 3') qui sont disposés de part et d'autre de la pièce en matériau composite.

15. Procédé de réparation selon la revendication 10, **caractérisé en ce que** la pression et la température appliquées sur la zone de travail sont pilotées pendant l'étape de polymérisation.

## Patentansprüche

1. Druckbeaufschlagungswerkzeug (3) einer Arbeitszone (2) eines Werkstücks (1) aus Verbundwerkstoff, wobei der Verbundwerkstoff eine durch ein Harz verdichtete Faserverstärkung aufweist, wobei vorimprägnierte Fasern (22) in der Arbeitszone aufgebracht werden und das Druckbeaufschlagungswerkzeug (3) so konfiguriert ist, dass es lösbar an einem Roboter montiert werden kann, wobei das Druckbeaufschlagungswerkzeug (3) Folgendes umfasst:
- ein gelenkiges Gerüst (11), das so konfiguriert ist, dass es sich der Form des Werkstücks (1) im Bereich der Arbeitszone (1) anpasst, und
- mindestens eine aufblasbare Membran (15), die fest mit dem Gerüst (11) verbunden ist und so konfiguriert ist, dass sie im aufgeblasenen Zustand einen vorgegebenen und gleichmäßigen Druck auf die Arbeitszone (2) anwendet.

2. Druckbeaufschlagungswerkzeug (3) nach dem vorstehenden Anspruch, **dadurch gekennzeichnet, dass** es ein Heizsystem (30) umfasst, das an der aufblasbaren Membran (15) angebracht ist, um eine vorbestimmte Temperatur anzulegen.

3. Druckbeaufschlagungswerkzeug (3) nach einem der vorstehenden Ansprüche, **dadurch gekennzeichnet, dass** das gelenkige Gerüst (11) mehrere Segmente (12) umfasst, die miteinander gelenkig verbunden sind.

4. Druckbeaufschlagungswerkzeug (3) nach einem der vorstehenden Ansprüche, **dadurch gekennzeichnet, dass** die aufblasbare Membran (15) mit einer Versorgungsquelle (20) für Aufblasfluid verbunden ist.

5. Druckbeaufschlagungswerkzeug (3) nach einem der vorstehenden Ansprüche, **dadurch gekennzeichnet, dass** die aufblasbare Membran (15) im aufgeblasenen Zustand eine Höhe (h1) zwischen 2 und 5 cm aufweist.

6. Druckbeaufschlagungswerkzeug (3) nach einem der vorstehenden Ansprüche, **dadurch gekennzeichnet, dass** es ein Befestigungssystem (14) zur lösbaren Befestigung an einem kollaborativen Roboter (4) umfasst.

7. Kollaborativer Roboter (4) umfassend ein Chassis (7), einen Arm (8), der von dem Chassis (7) getragen wird, und einen Effektor (9), der lösbar mit dem Arm (8) verbunden ist, wobei der Effektor (9) dazu bestimmt ist, durch den Arm (8) bewegt zu werden, und durch das Druckbeaufschlagungswerkzeug (3) nach einem der vorstehenden Ansprüche gebildet wird.

8. Reparaturverfahren einer beschädigten Zone eines Werkstücks (1) aus Verbundwerkstoff, wobei der Verbundwerkstoff eine durch ein Harz verdichtete Faserverstärkung umfasst, wobei das Reparaturverfahren Folgendes umfasst:
- einen Schritt des Aufbringens von mit Harz vorimprägnierten Fasern (22) in der beschädigten Zone, wodurch eine Arbeitszone (2) gebildet wird, und
- einen Schritt des Evakuierens eines Innenraums (23), der durch eine Blase (24) gebildet wird, die die vorimprägnierten Fasern (22) in der Arbeitszone (2) auf dichte Weise bedeckt, **dadurch gekennzeichnet, dass** das Verfahren Folgendes umfasst:
- einen Schritt des Aufsetzens eines Druckbeaufschlagungswerkzeugs (3) nach einem der Ansprüche 1 bis 6 in Bezug auf die von der Blase (24) bedeckten vorimprägnierten Fasern, und
- einen Schritt der Polymerisation der vorimprägnierten Fasern (22), bei dem mindestens ein Teilschritt durchgeführt wird, bei dem durch die aufblasbare Membran (15) ein vorbestimmter und gleichmäßiger Druck auf die Blase (24) ausgeübt wird, die die vorimprägnierten Fasern (22) bedeckt.

9. Reparaturverfahren nach dem vorstehenden Anspruch, **dadurch gekennzeichnet, dass** der vorbestimmte Druck zwischen 1 bar und 3 bar liegt.

10. Reparaturverfahren nach Anspruch 8 oder 9, **dadurch gekennzeichnet, dass** der Schritt der Polymerisation einen Teilschritt zum Anwenden einer vorbestimmten Temperatur umfasst.

11. Reparaturverfahren nach dem vorstehenden Anspruch, **dadurch gekennzeichnet, dass** die vorbestimmte Temperatur zwischen 60 °C und 180 °C liegt.

12. Reparaturverfahren nach dem vorstehenden Anspruch, **dadurch gekennzeichnet, dass** es einen Schritt zum Anwenden eines Gegendrucks auf das Werkstück (1) aus Verbundwerkstoff umfasst.

13. Reparaturverfahren nach dem vorstehenden Anspruch, **dadurch gekennzeichnet, dass** der Gegendruck durch ein weiteres Druckbeaufschlagungswerkzeug (3') erzeugt wird.

14. Reparaturverfahren nach dem vorstehenden Anspruch, **dadurch gekennzeichnet, dass** das Anwenden der vorbestimmten Temperatur durch die beiden Druckbeaufschlagungswerkzeuge (3, 3') erfolgt, die beiderseits des Werkstücks aus Verbundwerkstoff angeordnet sind.

15. Reparaturverfahren nach Anspruch 10, **dadurch gekennzeichnet, dass** der auf die Arbeitszone ausgeübte Druck und die darauf angewendete Temperatur während des Schritts der Polymerisation geregelt werden.

## Claims

1. Tooling (3) for pressurizing a work zone (2) of a part (1) made of composite material, the composite material comprising a fibrous reinforcement densified by a resin, pre-impregnated fibers (22) being applied in the work zone (2) and the pressurizing tooling (3) being configured so as to be removably mounted on a robot, the pressurizing tooling (3) comprising:
- an articulated skeleton (11) configured so as to adapt to the shape of the part (1) around the work zone (1), and
- at least one inflatable membrane (15) which is secured to the skeleton (11) and which is configured to apply, in an inflated state, a predetermined and uniform pressure to the work zone (2).

2. Pressurizing tooling (3) according to the preceding claims, **characterized in that** it comprises a heating system (30) mounted on the inflatable membrane (15) so as to apply a predetermined temperature.

3. Pressurizing tooling (3) according to any one of the preceding claims, **characterized in that** the articulated skeleton (11) comprises a plurality of segments (12) which are articulated together.

4. Pressurizing tooling (3) according to any one of the preceding claims, **characterized in that** the inflatable membrane (15) is connected to an inflation fluid supply source (20).

5. Pressurizing tooling (3) according to any one of the preceding claims, **characterized in that** the inflatable membrane (15) has a height (h1) of between 2 and 5 cm in its inflated state.

6. Pressurizing tooling (3) according to any one of the preceding claims, **characterized in that** it comprises an attachment system (14) for the removable attachment to a collaborative robot (4).

7. Collaborative robot (4) comprising a chassis (7), an arm (8) which is carried by the chassis (7) and an end effector (9) connected to the arm (8) in a removable manner, the end effector (9) being intended to be moved by the arm (8) and being formed by the pressurizing tooling (3) according to any one of the preceding claims.

8. Method of repairing a damaged zone of a part (1) made of composite material, the composite material comprising a fibrous reinforcement densified by a resin, the repair method comprising:
- a step of applying pre-impregnated fibers (22) with a resin to the damaged zone forming a work zone (2), and
- a step of vacuuming an internal cavity (23) formed by a bladder (24) covering the pre-impregnated fibers (22) in the work zone (2) in a sealed manner,
**characterized in that** the method comprises:
- a step of placing a pressurizing tooling (3) according to any one of claims 1 to 6 opposite the pre-impregnated fibers covered by the bladder (24), and
- a step of polymerizing the pre-impregnated fibers (22) wherein at least one sub-step of applying a predetermined and uniform pressure by the inflatable membrane (15) to the bladder (24) covering the pre-impregnated fibers (22) is carried out.

9. Repair method according to the preceding claim, **characterized in that** the predetermined pressure is between 1 bar and 3 bar.

10. Repair method according to claim 8 or 9, **characterized in that** the polymerization step comprises a sub-step of applying a predetermined temperature.

11. Repair method according to the preceding claim, **characterized in that** the predetermined temperature is between 60°C and 180°C.

12. Repair method according to the preceding claim, **characterized in that** it comprises a step of applying counter-pressure to the part (1) made of composite material.

13. Repair method according to the preceding claim, **characterized in that** the counter-pressure is carried out by another pressurizing tooling (3').

14. Repair method according to the preceding claim, **characterized in that** the predetermined temperature application is carried out by the two pressurizing tooling (3, 3') which are arranged on either side of the part made of composite material.

15. Repair method according to claim 10, **characterized in that** the pressure and temperature applied to the work zone are controlled during the polymerization step.
